# FASCICULE DE BREVET EUROPEEN

(11) **EP 2 152 188 B1**
(45) Date de publication et mention de la délivrance du brevet: **09.11.2011**
(21) Numéro de dépôt: 08805942.3
(22) Date de dépôt: 05.06.2008
(51) Int. Cl.: A61C 1/08

(54) **GABARIT DE FORAGE POUR LA POSE D'IMPLANT DENTAIRE**
BOHRVORRICHTUNG ZUR PLATZIERUNG EINES ZAHNÄRZTLICHEN IMPLANTATS
DRILLING GAUGE FOR PLACING A DENTAL IMPLANT

(30) Priorité: 11.06.2007 FR 0755657
(43) Date de publication de la demande: 17.02.2010
(73) Titulaire: Bousquet, Frédéric, 34000 Montpellier (FR)
(72) Inventeur: Bousquet, Frédéric, 34000 Montpellier (FR)
(74) Mandataire: Rhein, Alain
(86) Numéro de dépôt international: PCT/FR2008/051006
(87) Numéro de publication internationale: WO 2009/001007

(56) Documents cités:
- US-A- 5 556 278
- US-A- 5 613 852

## Description

La présente invention a pour objet dans le domaine de la chirurgie dentaire et plus particulièrement de pose d'implant dentaire, un procédé de fabrication d'un gabarit de forage, ainsi qu'un dispositif de tuteur pour la mise en oeuvre du procédé de fabrication d'un gabarit de forage.

La pose d'implants dentaires est traditionnellement réalisée après un examen radiologique préopératoire tel qu'une tomographie ou un scanner, et l'ouverture de la gencive de manière suffisamment large afin de pouvoir voir l'épaisseur et le grand axe de la crête osseuse avant de commencer le forage.

Afin que ces interventions soient mieux vécues il est préféré de réaliser des incisions à minima ou des operculisations de la gencive car les suites opératoires sont moins importantes, l'exposition de l'os est moindre car on décolle très peu ou pas du tout le périoste, ce qui permet une meilleure cicatrisation osseuse sans lyse osseuse associée.

Ces techniques de chirurgie en aveugle sans assistance au forage sont possibles dans des cas favorables de crêtes osseuses larges, mais deviennent incertaines et risquées quand les crêtes osseuses sont étroites, ou présentent des concavités, ou bien s'il existe des proximités anatomiques à éviter.

Actuellement, au cours de ces interventions, on pratique une estimation de l'axe de forage ou bien on réalise un guide de forage à partir du scanner réalisé. Des logiciels permettent le positionnement des implants sur le scanner, et un guide de forage est élaboré en fonction de ces informations et est reporté en bouche, ce qui permet une assistance directionnelle au forage.

Cette technique donne de bons résultats, mais elle présente des inconvénients, notamment en ce qu'elle nécessite un matériel onéreux, que peu de chirurgiens dentistes sont susceptibles de posséder.

US 5, 556, 228 est considèré comme l'état de la technique la plus proche et ne divulgue pas la vérification et la correction de la position du guide forage.

La présente invention a pour but de remédier à ces inconvénients en proposant un procédé de fabrication d'un gabarit de forage pour la pose d'implant dentaire, et le dispositif de tuteur pour la mise en oeuvre dudit procédé, qui est de conception simple et peu onéreuse, et dont la mise en oeuvre est d'une grande simplicité.

Le procédé de fabrication d'un gabarit de forage pour la pose d'implant dentaire selon l'invention se caractérise essentiellement en ce qu'il consiste à réaliser les opérations suivantes :
- réaliser un modèle en plâtre de la mâchoire, ou partie de mâchoire, à traiter,
- réaliser dans ledit modèle en plâtre un forage selon un axe estimé,
- introduire dans ledit forage une partie d'un tuteur et adapter sur son autre partie qui émerge un guide de forage,
- vérifier la position dudit guide forage,
- corriger la position dudit guide de forage par le remplacement dudit tuteur par un autre dont la partie émergente est d'axe différent de celui de la partie introduite dans ledit forage, et qui est choisi en sorte que ledit guide soit bien positionné,
- réaliser une gouttière en résine coulée ou thermoformée sur le modèle en plâtre, en emprisonnant et en immobilisant ledit guide, en sorte de constituer le gabarit de forage.

Selon une caractéristique additionnelle du procédé selon l'invention, après la phase d'introduction dans le forage d'un tuteur et d'adaptation sur sa partie émergente d'un guide de forage, on vérifie la position dudit guide forage au travers d'une tomographie effectuée sur le patient alors que celui-ci est équipé d'une gouttière en résine moulée ou thermoformée sur le modèle en plâtre, et incorporant ledit guide de forage.

Le dispositif de tuteur pour la mise en oeuvre du procédé de fabrication d'un gabarit de forage selon l'invention se caractérise essentiellement en ce qu'il se présente sous la forme d'une tige comprenant deux parties, une première partie à introduire dans un forage estimé, pratiqué dans un modèle en plâtre de la mâchoire, ou partie de mâchoire, à traiter, et une seconde partie de maintien d'un guide de forage, et en ce que lesdites deux parties sont d'axes différents, différence qui correspond à la correction éventuelle à apporter au positionnement du guide de forage.

Selon une caractéristique additionnelle du dispositif de tuteur selon l'invention, les axes des deux parties sont parallèles.

Selon une autre caractéristique additionnelle du dispositif de tuteur selon l'invention, les axes des deux parties font entre eux un angle.

Selon une autre caractéristique additionnelle du dispositif de tuteur selon l'invention, les axes des deux parties font un angle et se croisent au niveau de la partie émergente.

Selon une autre caractéristique additionnelle du dispositif de tuteur selon l'invention, les axes des deux parties font un angle et se croisent au niveau de la partie à introduire.

Selon une autre caractéristique additionnelle du dispositif de tuteur selon l'invention, l'extrémité libre de la partie de maintien du guide de forage présente un élément apte à permettre de visualiser l'orientation de la correction apporté par le tuteur.

Selon un mode de réalisation particulier du dispositif de tuteur selon l'invention, les deux parties sont liées l'une à l'autre au travers d'une articulation équipée d'un moyen de blocage dans une position choisie.

Selon une autre caractéristique additionnelle du mode de réalisation particulier du dispositif de tuteur selon l'invention, d'une part l'extrémité supérieure de la partie inférieure du tuteur présente une tête de forme sphérique, disposée axialement ou décalée latéralement, et d'autre part la partie supérieure consiste en un tube taraudé, et dont l'extrémité inférieure comporte une cavité prévue apte à retenir ladite tête sphérique, tandis qu'une vis est vissée dans ledit tube et est apte à venir serrer ladite tête sphérique et l'immobiliser dans la position choisie.

Les avantages et les caractéristiques du procédé et du dispositif de tuteur selon l'invention, ressortiront plus clairement de la description qui suit et qui se rapporte au dessin annexé, lequel en représente plusieurs modes de réalisation non limitatifs.

Dans le dessin annexé :
- les figures 1, 2, 3, 4 et 5 représentent des vues schématiques illustrant des étapes successives du procédé de fabrication selon l'invention.
- les figures 6a, 6b, 6c et 6d représentent des vues schématiques en élévation de plusieurs variantes du dispositif de tuteur selon l'invention.
- la figure 7 représente une vue schématique d'une variante d'un dispositif de tuteur selon l'invention.
- la figure 8 représente une vue schématique partielle en coupe d'un mode de réalisation particulier du dispositif de tuteur selon l'invention.

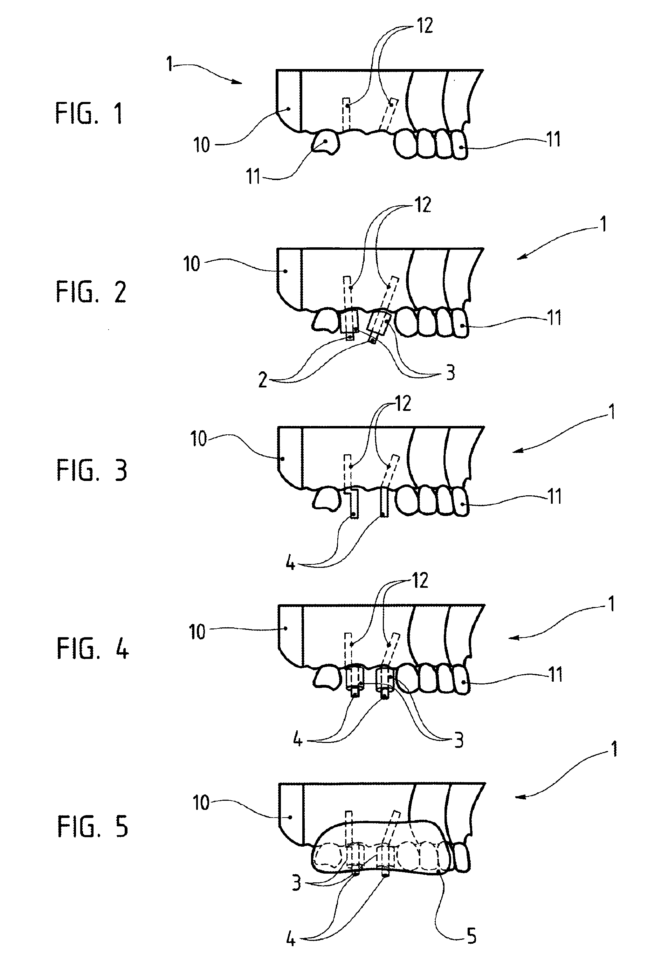

En référence aux figures 1, 2, 3, 4 et 5, on peut voir un modèle en plâtre 1 réalisé à partir d'une prise d'empreinte de la bouche du patient à traiter, reproduisant la gencive 10 et les dents 11 de ce dernier, et qui en l'occurrence consiste à réaliser deux implants destinés au comblement d'un espace s'étendant entre les dents 11.

Sur la figure 1, on peut voir que sont réalisés dans le modèle 1 en plâtre, deux forages 12 destinés à figurer l'axe de mise en place d'implants. Ces forages 12 sont réalisés selon des axes estimés, sans guides, ils sont par conséquent susceptibles de devoir être corrigés.

Sur la figure 2, on a introduit dans chacun des forages 12, un tuteur 2, qui consiste en une tige de section ronde et constante, et on a enfilé sur chacun de ces tuteurs 2, un guide de forage 3, lequel se présente sous la forme d'un élément tubulaire de préférence en métal. Ces guides sont destinés à être emprisonnés dans une gouttière en résine moulée ou thermoformée sur le modèle en plâtre 1, laquelle est ensuite reportée dans la bouche du patient pour constituer un gabarit de forage.

Comme on peut le constater, les axes des guides de forage 3 ne sont pas conformes à l'alignement des dents 11, il convient donc de corriger la position des guides 3 afin dans le même temps de corriger l'axe de forage.

On notera qu'à cette étape du procédé, il est possible, optionnellement, de figer la position des guides de forage 3 par rapport aux dents 11, en réalisant une gouttière base de résine coulée ou thermoformée, laquelle sera mise en place dans la bouche du patient, tandis qu'une tomographie préopératoire pourra être réalisée afin de révéler les éventuelles corrections d'axes à effectuer.

On notera également que cette vérification peut être réalisée au travers d'un examen autre qu'une tomographie, par exemple un scanner, ce qui nécessite toutefois de remplacer les guides en métal, le temps du contrôle, par des guides de forme analogue réalisés dans un matériau non métallique, par exemple en résine barytée ou en gutta-percha.

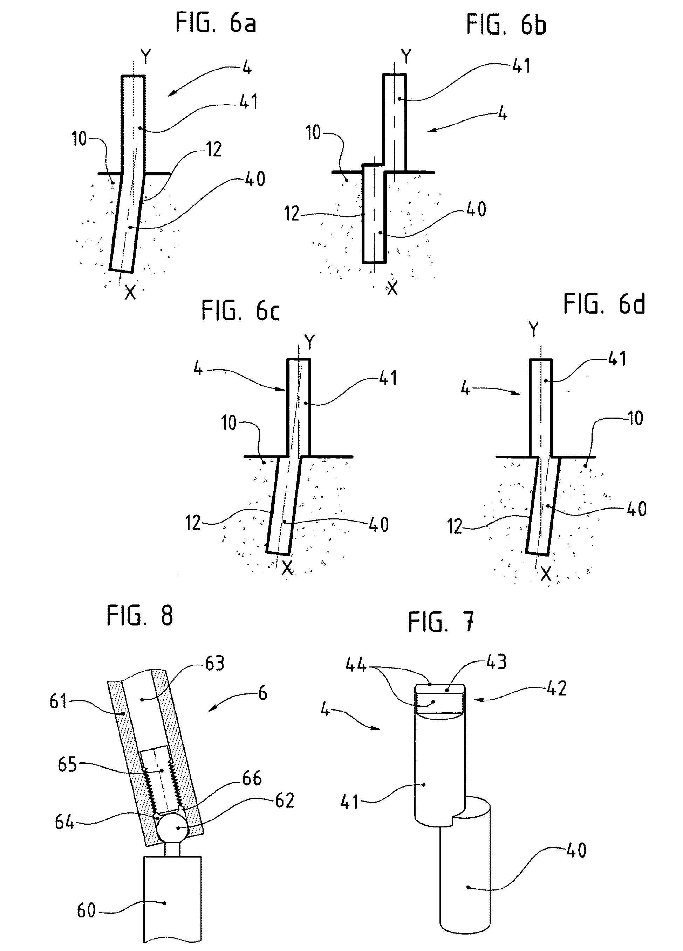

En référence maintenant à la figure 3, on peut voir que les tuteurs 2 ont été remplacés par des tuteurs 4 selon l'invention, dont plusieurs variantes sont représentées sur les figures 6a, 6b, 6c et 6d.

En référence à ces figures 6a, 6b, 6c et 6d, on peut voir que chacun des tuteurs 4 selon l'invention comprend deux parties, une partie 40 destinée à être introduite dans un forage 12, et une partie 41 destinée à demeurer émergée, et à recevoir un guide de forage 3.

Comme on peut le constater, pour chacun des tuteurs 4, la partie 40, d'axe X, n'est pas dans le prolongement de la partie 41 d'axe Y.

Ainsi, sur la figure 6a on peut voir que les parties 40 et 41 font entre elles un certain angle, les axes X et Y se croisant à la jonction des deux parties 40 et 41.

Sur la figure 6b, les parties 40 et 41 sont décalées transversalement, les axes X et Y étant parallèles.

Sur la figure 6c, les parties 40 et 41 font entre elles un certain angle et sont décalés transversalement, les axes X et Y se croisant au-dessus à la jonction des deux parties 40 et 41, c'est-à-dire au niveau de la partie 41.

Sur la figure 6d, les parties 40 et 41 font entre elles un certain angle et sont décalés transversalement, les axes X et Y se croisant sous la jonction des deux parties 40 et 41, c'est-à-dire au niveau de la partie 40.

Ces quatre tuteurs 4 représentent les principales familles de tuteurs, dans chacune desquelles la valeur de l'angle et/ou la distance de décalage transversal peuvent varier.

Ainsi, en revenant à la figure 3, on peut voir que les parties émergentes 41 des tuteurs 4 introduits dans les forages 12, sont parfaitement positionnées par rapport aux dents 11.

Sur la figure 4, des guides de forage 3 sont enfilés sur les tuteurs 4, tandis que sur la figure 5 une gouttière 5 en résine est moulée ou thermoformée sur le modèle en plâtre 1, en sorte d'emprisonner les guides de forage 3, afin de constituer un gabarit de forage.

Le gabarit de forage obtenu, pourra être positionné dans la bouche du patient, et les guides de forage 3 pourront permettre de réaliser des forages dans l'axe des guides de forage 3. Ainsi, les forages initiaux 12 correspondent à l'axe X des parties 40, alors que les forages définitifs seront réalisés à part du gabarit selon les axes Y des parties 41.

La détermination de l'angle de correction pourra être déterminée de plusieurs manières, fonction de la nature du contrôle réalisé. Il pourra par exemple être mesuré et comparé directement sur le cliché obtenu.

En référence maintenant à la figure 7, on peut voir que de manière avantageuse, il est prévu de munir l'extrémité libre de la partie 41 des tuteurs 4, d'un élément 42 permettant de visualiser, même après mise en place du guide de forage 3, l'orientation de la correction apportée par le tuteur 4. Dans le mode de réalisation représenté, l'élément 42 se présente sous la forme d'une patte plate 43, dont les deux méplats 44 sont parallèles à la direction dans laquelle est réalisé un décalage entre la partie 40 et la partie 41.

De manière avantageuse, la patte plate 43 peut être saisie afin de manipuler le tuteur 4, et corriger un déplacement fortuit avant, voire pendant la solidification de la résine.

On notera que l'élément 42 peut présenter différentes formes, il peut comprendre qu'un seul méplat, ou bien consister en une simple marque réalisée en extrémité.

D'autre part, l'élément 42 n'est pas limité à indiquer un décalage entre les parties 40 et 41, il peut aussi indiquer le plan dans lequel l'une des parties 40 ou 41 est inclinée par rapport à l'autre.

En référence maintenant à la figure 8, on peut voir un mode de réalisation particulier 6 d'un tuteur selon l'invention.

Ce tuteur 6 est à géométrie variable, il comprend à cet effet deux parties, une partie 60 destinée à être introduite dans un forage, et une partie 61 destinée à demeurer émergée à recevoir un guide de forage.

La partie 61 comprend à une extrémité une tête 62 de forme sphérique, tandis que la partie 60 est tubulaire et comprend un canal axial 63 dont une extrémité est pourvue d'une cavité rétentrice 64 apte à loger la tête 62.

Le canal axial 63 de la partie 60 est taraudé, et une vis 65 peut y être vissée jusqu'à être serrée contre la tête 62 en sorte d'immobiliser celle-ci et donc de figer la position de la partie 40 par rapport à la partie 41.

On notera que dans le mode de réalisation représenté, la tête 62 est dans l'axe de la partie 61, en sorte que la correction ne peut être que d'ordre angulaire. Il est par contre possible que la tête soit décalée transversalement pour réaliser une correction angulaire en plus d'un décalage.

La détermination de l'angle peut être réalisé à l'aide de jauges, comprenant chacune une empreinte en creux destinée à recevoir le tuteur 6, et présentant chacune un profil différent ainsi qu'une inscription permettant d'identifier le profil.

On notera que de telles jauges peuvent être utilisées pour déterminer la valeur de correction d'un tuteur 4.

## Revendications

1. Procédé de fabrication d'un gabarit de forage pour la pose d'implant dentaire **caractérisé en ce qu'**il consiste à réaliser les opérations suivantes :
- réaliser un modèle (1) en plâtre de la mâchoire, ou partie de la mâchoire, à traiter,
- réaliser dans ledit modèle (1) en plâtre un forage (12) selon un axe estimé,
- introduire dans ledit forage (12) une partie d'un tuteur (2) et adapter sur son autre partie qui émerge un guide de forage (3),
- vérifier la position dudit guide de forage (3),
- corriger la position dudit guide de forage (3) par le remplacement dudit tuteur (2) par un autre (4) dont la partie émergente (41) est d'axe (Y) différent de celui (X) de la partie (40) introduite dans ledit forage (12), et qui est choisi en sorte que ledit guide (3) soit bien positionné,
- réaliser une gouttière (5) en résine coulée ou thermoformée sur le modèle en plâtre (1), en emprisonnant et en immobilisant ledit guide (3), en sorte de constituer le gabarit de forage.

2. Procédé de fabrication selon la revendication 1, **caractérisé en ce qu'**après la phase d'introduction dans le forage (12) d'un tuteur (2) et d'adaptation sur sa partie émergente d'un guide de forage (3), on vérifie la position dudit de guide forage (3) au travers d'une tomographie effectuée sur le patient alors que celui-ci est équipé d'une gouttière en résine moulée ou thermoformée sur le modèle en plâtre (1), et incorporant ledit guide de forage (3).

3. Procédé de fabrication selon la revendication 1, **caractérisé en ce qu'**après la phase d'introduction dans le forage (12) d'un tuteur (2) et d'adaptation sur sa partie émergente d'un guide de forage (3), on vérifie la position dudit de guide forage (3) au travers d'un scanner effectué sur le patient alors que celui-ci est équipé d'une gouttière en résine moulée ou thermoformée sur le modèle en plâtre (1), et incorporant ledit guide de forage (3), lequel est réalisé dans un matériau non métallique.

4. Dispositif de tuteur pour la mise en oeuvre du procédé de fabrication d'un gabarit de forage selon l'une quelconque des revendications 1 à 3, **caractérisé en ce qu'**il se présente sous la forme d'une tige comprenant deux parties, une première partie à introduire dans un forage estimé pratiqué dans un modèle en plâtre de la mâchoire, ou partie de mâchoire, à traiter, et une seconde partie de maintien d'un guide de forage, et **en ce que** lesdites deux parties sont d'axes différents, différence qui correspond à la correction éventuelle à apporter au positionnement du guide de forage.

5. Dispositif de tuteur selon la revendication 4, **caractérisé en ce que** les axes des deux parties sont parallèles.

6. Dispositif de tuteur selon la revendication 4, **caractérisé en ce que** les axes des deux parties font entre eux un angle.

7. Dispositif de tuteur selon la revendication 6, **caractérisé en ce que** les axes des deux parties font un angle et se croisent au niveau de la partie émergente.

8. Dispositif de tuteur selon la revendication 6, **caractérisé en ce que** les axes des deux parties font un angle et se croisent au niveau de la partie à introduire.

9. Dispositif de tuteur selon l'une quelconque des revendications 4 à 8, caractérisé en ce l'extrémité libre de la partie de maintien du guide de forage présente un élément apte à permettre de visualiser l'orientation de la correction apportée par le tuteur.

10. Dispositif de tuteur selon l'une quelconque des revendications 4 à 8, **caractérisé en ce que** les deux parties sont liées l'une à l'autre au travers d'une articulation équipée d'un moyen de blocage dans une position choisie.

11. Dispositif de tuteur selon la revendication 10, **caractérisé en ce que** d'une part l'extrémité supérieure de la partie inférieure du tuteur présente une tête de forme sphérique, disposée axialement ou décalée latéralement, et d'autre part la partie supérieure consiste en un tube taraudé, et dont l'extrémité inférieure comporte une cavité prévue apte à retenir ladite tête sphérique, tandis qu'une vis est vissée dans ledit tube et est apte à venir serrer ladite tête sphérique et l'immobiliser dans la position choisie.

## Claims

1. Method for manufacturing a drilling gauge for placing a dental implant, wherein it consists in carrying out the following operations:
- making a gypsum model (1) of the jaw, or a portion of the jaw, to be treated,
- making a bore (12) in said gypsum model (1), along an estimated axis,
- inserting into said bore (12) a portion of a stent (2) and adapting a boring guide (3) on its other, protruding portion,
- checking the position of said boring guide (3),
- correcting the position of said boring guide (3) by replacing said stent (2) with another one (4) the protruding portion (41) of which has an axis (Y) that is different from the one (X) of the portion (40) inserted in said bore (12), and that is selected so that said guide (3) is correctly positioned,
- making a splint (5) of cast or thermoformed resin on the gypsum model (1), while trapping and immobilizing said guide (3), so as to form the drilling gauge.

2. Manufacturing method according to claim 1, wherein after the stage of insertion of a stent (2)into the bore (12) and adaptation on its protruding portion of a boring guide (3), the position of said boring guide (3) is checked through a tomography performed on the patient while the latter is equipped with a splint of cast or thermoformed resin on the gypsum model (1), and that incorporates said boring guide (3).

3. Manufacturing method according to claim 1, wherein after the stage of insertion of a stent (2) into the bore (12) and adaptation on its protruding portion of a boring guide (3), the position of said boring guide (3) is checked through a scanning performed on the patient while the latter is equipped with a splint of cast or thermoformed resin on the gypsum model (1), and that incorporates said boring guide (3), which is made out of a non-metallic material.

4. Stent device for implementing the method for manufacturing a drilling gauge according to any of claims 1 through 3, wherein the device is in the form of a rod comprising two portions, a first portion to be inserted into an estimated bore made in a gypsum model of the jaw, or portion of the jaw, to be treated, and a second portion for supporting a boring guide, and said two portions have different axes, which difference corresponds to the possible correction to be made to the positioning of the boring guide.

5. Stent device according to claim 4, wherein the axes of the two portions are parallel.

6. Stent device according to 41aim 4, wherein the axes of the two portions include an angle between them.

7. Stent device according to claim 6, wherein the axes of the two portions include an angle between them and intersect at the level of the protruding portion.

8. Stent device according to claim 6, wherein the axes of the two portions include an angle between them and intersect at the level of the portion to be inserted.

9. Stent device according to any of claims 4 through 8, wherein the free end of the portion for supporting the boring guide has an element capable of permitting to display the orientation of the correction made by the stent.

10. Stent device according to any of claims 4 through 8, wherein the two portions are connected to each other through a joint equipped with a means for locking in a selected position.

11. Stent device according to claim 10, wherein, on the one hand, the upper end of the lower portion of the stent has a head with a spherical shape placed axially or shifted laterally and, on the other hand, the upper portion consists of an internally threaded tube, and the lower end of which includes a cavity designed capable of holding said spherical head, while a screw is screwed into said tube and is capable of squeezing said spherical head and of immobilizing it in the selected position.

## Patentansprüche

1. Verfahren zur Fertigung einer Bohrschablone zum Einsetzen eines Zahnimplantats, **dadurch gekennzeichnet, dass** es die Ausführung folgender Arbeitsschritte umfasst:
- Fertigen eines Gipsmodells (1) des zu behandelnden Kiefers oder Kieferteils,
- Ausführen in dem besagten Gipsmodell (1) einer Bohrung (12) nach einer zuvor ermittelten abgeschätzten Achse,
- Einführen in die besagte Bohrung (12) eines Teils einer Gewebestütze (2) und Anpassen auf ihren anderen herausragenden Teil einer Bohrführung (3),
- Überprüfen der Position der besagten Bohrführung (3),
- Korrigieren der Position der besagten Bohrführung (3) durch den Austausch der besagten Gewebestütze (2) durch eine andere (4), deren herausragender Teil (41) eine Achse (Y) aufweist, die sich von jener (X) des in der besagten Bohrung (12) eingesteckten Teils (40) unterscheidet, und die derart gewählt ist, dass die besagte Führung (3) gut positioniert sei,
- Anfertigen auf dem Gipsmodell (1) einer Schiene (5) aus geschmolzenem oder wärmebehandeltem Kunststoff, wobei die besagte Führung (3) positioniert und unbeweglich gemacht wird, derart, um die Bohrschablone zu bilden.

2. Verfahren zur Fertigung nach Anspruch 1, **dadurch gekennzeichnet, dass** nach der Phase des Einsteckens einer Gewebestütze (2) in die Bohrung (12) und der Anpassung einer Rohrführung (3) auf ihren herausragenden Teil die Position der besagten Bohrführung (3) durch eine tomographische Untersuchung überprüft wird, die an dem Patienten getätigt wird, während dieser mit einer Schiene (1) aus auf dem Gipsmodell geschmolzenem oder wärmebehandeltem Kunststoff, das die besagte Bohrführung (3) eingliedert, versehen ist.

3. Verfahren zur Fertigung nach Anspruch 1, **dadurch gekennzeichnet, dass** nach der Phase des Einsteckens einer Gewebestütze (2) in die Bohrung (12) und der Anpassung einer Bohrführung (3) auf ihren herausragenden Teil die Position der besagten Bohrführung (3) durch ein Einscannen überprüft wird, das an dem Patienten getätigt wird, während dieser mit einer Schiene aus auf dem Gipsmodell (1) geschmolzenem oder wärmebehandeltem Kunststoff, das die besagte Rohrführung (3) eingliedert, die aus einem nichtmetallischen Werkstoff hergestellt ist, versehen ist.

4. Gewebestützvorrichtung für die Umsetzung des Verfahrens zur Fertigung einer Bohrschablone nach irgendeinem der Ansprüche 1 bis 3, **dadurch gekennzeichnet, dass** sie als ein Stift ausgestaltet ist, der zwei Teile umfasst - einen ersten Teil zum Einstecken in eine zuvor ermittelte abgeschätzte Bohrung, die in einem Gipsmodell des zu behandelnden Kiefers oder Kieferteils ausgeführt ist, und einen zweiten Teil zum Halten einer Bohrführung, und **dadurch gekennzeichnet, dass** die besagten zwei Teile unterschiedlich verlaufende Achsen aufweisen, wobei dieser Unterschied der Korrektur entspricht, die eventuell an der Positionierung der Bohrführung zu machen ist.

5. Gewebestützvornchtung nach Anspruch 4, **dadurch gekennzeichnet, dass** die Achsen der beiden Teile parallel sind.

6. Gewebestützvorrichtung nach Anspruch 4, **dadurch gekennzeichnet, dass** die Achsen der beiden Teile einen Winkel zueinander bilden.

7. Gewebestützvorrichtung nach Anspruch 6, **dadurch gekennzeichnet, dass** die Achsen der beiden Teile einen Winkel bilden und sich im Bereich des herausragenden Teils kreuzen.

8. Gewebestützvornchtung nach Anspruch 6, **dadurch gekennzeichnet, dass** die Achsen der beiden Teile einen Winkel bilden und sich im Bereich des einzusteckenden Teils kreuzen.

9. Gewebestützvorrichtung nach irgendeinem der Ansprüche 4 bis 8, **dadurch gekennzeichnet, dass** das freie Ende des Teils zum Halten der Bohrführung ein Bauteil aufweist, das geeignet ist, um die Veranschaulichung der Orientierung der durch die Gewebestütze abgeleiteten Korrektur zu ermöglichen.

10. Gewebestützvorrichtung nach irgendeinem der Ansprüche 4 bis 8, **dadurch gekennzeichnet, dass** die beiden Teile miteinander durch eine Gelenkverbindung verbunden sind, die mit einem Mittel zur Arretierung in einer gewählten Position ausgestattet ist.

11. Gewebestützvorrichtung nach Anspruch 10, **dadurch gekennzeichnet, dass**, einerseits, das obere Ende des unteren Gewebestützteils einen kugelförmigen Kopf aufweist, der axial oder seitenversetzt angeordnet ist, und, andererseits, der obere Teil aus einem mit Innengewinde versehenen Röhrchen besteht, und deren untere Ende einen Hohlraum umfasst, der geeignet vorgesehen ist, um den besagten kugelförmigen Kopf festzuhalten, während in der besagten Röhre eine Schraube geschraubt ist, und der geeignet ist, um den besagten kugelförmigen Kopf einzuspannen und diesen in der gewählten Position unbeweglich zu machen.
